# EUROPEAN PATENT APPLICATION

(11) **EP 4 020 680 A1**
(43) Date of publication of application: **29.06.2022**
(21) Application number: 19943824.3
(22) Date of filing: 22.11.2019
(51) Int. Cl.: H01M 50/20, H01M 10/613

(54) **BATTERY PACK**

(30) Priority: 23.08.2019 CN 201910785506; 23.08.2019 CN 201910785493
(71) Applicant: Positec Power Tools (Suzhou) Co., Ltd., Suzhou, Jiangsu 215123 (CN)
(72) Inventor: JIAO, Shiping, Suzhou, Jiangsu 215123 (CN); DENG, Chunying, Suzhou, Jiangsu 215123 (CN); FAN, Xiubin, Suzhou, Jiangsu 215123 (CN)
(74) Representative: Dentons UK and Middle East LLP
(86) International application number: PCT/CN2019/120077
(87) International publication number: WO 2021/036030

(57) **Abstract**

The present invention discloses a battery pack, including: at least one battery module, the battery module comprising a plurality of battery cells; a support formed of a thermally conductive material, wherein the support comprises a plurality of mounting portions and connecting portion, the connecting portion relatively fixedly connect the plurality of mounting portions together; accommodation cavities configured to accommodate the battery cells, the accommodation cavities being formed in the mounting portions, and a plurality of paths running through the support are preset inside the support, and the plurality of paths are distributed between adjacent mounting portions; and a housing covering the support, the housing comprising air flow hole in communication with the plurality of paths.. In the present invention, the battery pack is optimized and improved, during discharging of a battery core of the battery pack, the temperature reduction efficiency of the battery core can be improved, and temperatures of the battery core and a support in direct contact with the battery core can be effectively reduced.

## Description

### Technical Field

The present embodiments relate to the field of power tool technologies, and in particular, to a battery pack.

### Related Art

A battery pack is generally a battery module formed by a plurality of battery cells arranged in series or in parallel. Further, a plurality of battery modules may also be connected in series or in parallel to form a battery cell group with a specific voltage and capacity. The battery cells in the battery pack will quickly generate a large amount of heat during discharging. In some case, if the battery pack is connected to a charger before the heat is dissipated in time, the charger cannot charge the battery pack normally. This is because a circuit protection program is generally configured in the charger. The charger starts a charging circuit to perform charging only when detecting that the temperature of the battery pack reaches a predetermined low temperature. Therefore, if the battery pack does not have good heat dissipation performance, the heat generated during discharging cannot be dissipated quickly, and it will take a large amount of time to cool down before next charging. In some other cases where no circuit protection program is configured in the charger, when the battery pack is electrically connected to the charger for charging before cooling down, the battery cells may be damaged, the discharge capability of the battery pack may be weakened, the service life of the battery pack may be shortened, or even safety accidents may be caused.

In the related art, to dissipate heat for the battery pack, one manner is to dispose a battery support having a heat dissipation function outside the battery pack. The battery support is at least partially formed of a thermally conductive material, to transfer heat generated in the battery to the battery support and then dissipate the heat into air from the battery support.

The battery support can discharge heat loss generated in the battery to the air to a certain extent. However, due to the rapid generation of the heat during discharging, it is found during use that when no auxiliary heat dissipation device such as a fan is used, most of the heat accumulates on the battery support, and the heat on the battery support cannot be quickly transferred to the air. Further, because the battery cells are in direct contact with an inner side of the battery support and the temperature of the battery cells is transferred outward, when the temperature of the battery cells is close to the temperature of the battery support, heat will no longer be transferred through the battery support, that is, the temperature of the surfaces of the battery cells will not be further reduced, failing to achieve an ideal heat dissipation effect for the battery cells.

### SUMMARY

To overcome defects in the related art, the present embodiments provide a battery pack, which can improve the temperature reduction efficiency of a battery cell during discharging of the battery cell of the battery pack, and effectively reduce temperatures of the battery cell and a support in direct contact with the battery cell.

The foregoing objective of the present embodiments may be achieved by using the following technical solutions.

A battery pack, including: at least one battery module, the battery module comprising a plurality of battery cells; a support formed of a thermally conductive material, wherein the support comprises a plurality of mounting portions and connecting portion, the connecting portion relatively fixedly connect the plurality of mounting portions together; accommodation cavities configured to accommodate the battery cells, the accommodation cavities being formed in the mounting portions, and a plurality of paths running through the support are preset inside the support, and the plurality of paths are distributed between adjacent mounting portions; and a housing covering the support, the housing comprising air flow hole in communication with the plurality of paths.

In some embodiments, wherein the plurality of paths and the accommodation cavities are independent of each other.

In some embodiments, the battery pack further includes a heat storage member at least partially attached and mounted on an outer side of the support, where a specific heat capacity of the heat storage member is greater than a specific heat capacity of the support.

In some embodiments, the heat storage member is made of a material with a specific heat capacity greater than 2.6 J/(g.K).

In some embodiments, a thermal conductivity of the thermally conductive material is greater than 0.3 W/m.k.

In some embodiments, the support is provided with a deformation portion on a side wall of the mounting portion, and an outer diameter of the battery cell is less than a hole diameter of the accommodation cavity, and the battery cell is clamped and attached to the accommodation cavity through elastic deformation of the deformation portion after being accommodated in the accommodation cavity.

In some embodiments, the deformation portion is at least one protrusion formed inward by the side wall of the mounting portion.

In some embodiments, an outer diameter of the battery cell is greater than a hole diameter of the accommodation cavity, and the battery cell is disposed in the accommodation cavity of the mounting portion by hot pressing and tensioning.

In some embodiments, the battery cell is provided with a first end surface and a second end surface that are opposite to each other and a side surface disposed around the first end surface and the second end surface, and an attaching area between the side surface and the mounting portion occupies at least 80% of the side surface.

In some embodiments, the paths are distributed between outer side walls of adjacent mounting portions, and a minimum width of the path is greater than 1.5 mm.

In some embodiments, the path extends in a direction perpendicular to an axial direction of the battery cell.

In some embodiments, heat dissipation fins are respectively disposed on side walls of the mounting portions at two sides of the paths, the heat dissipation fins are distributed at intervals in an axial direction of the battery cell, and a length over which the heat dissipation fins are distributed is 3/4 of a total length of the battery cells in the axial direction.

In some embodiments, the battery pack further includes a heat storage member at least partially attached and mounted on an outer side of the support, wherein first openings in communication with the paths and the air flow hole are provided in the heat storage member; the housing comprises an upper cover and a lower cover that are opposite to each other, and the air flow hole comprises an upper opening provided in the upper cover and a lower opening provided in the lower cover; and the paths run through the support in the direction perpendicular to the axial direction of the battery cell.

In some embodiments, the battery pack further includes a pressing member, wherein the pressing member is pressed on an outer side of the heat storage member and is configured to apply an action force for clamping the support to the heat storage member, and the pressing member comprises second openings in communication with the first openings and the air flow hole; the first openings and the second openings are distributed on two sides of the path from inside to outside in the direction perpendicular to the axial direction of the battery cell; and the upper opening, the lower openings, and the paths cooperate with the first openings and the second openings to form a heat dissipation channel.

In some embodiments, the housing comprises an upper cover and a lower cover that are opposite to each other, and the air flow hole comprises an upper opening provided in the upper cover and a lower opening provided in the lower cover; and the support is provided with an end cover in an axial direction of the battery cell, third openings is provided in the end cover, the paths run through the support in the axial direction of the battery cell, and the lower opening and the upper opening cooperate with the third openings and the paths in the axial direction of the battery cell to form a heat dissipation channel.

A battery pack, including: at least one battery module, the battery module comprising a plurality of battery cells;a support formed of a thermally conductive material, wherein the support comprises a plurality of mounting portions and connecting portion, the connecting portion relatively fixedly connect the plurality of mounting portions together; accommodation cavities configured to accommodate the battery cells, the accommodation cavities being formed in the mounting portions, a plurality of paths running through the support are preset inside the support, and the plurality of paths extend in a direction perpendicular to an axial direction of the battery cell; and a housing, the housing comprising air flow hole in communication with the plurality of paths.

In some embodiments, the plurality of paths and the accommodation cavities are independent of each other.

According to the battery pack provided in the embodiments of this application, by improving a structure of the battery pack, an independent heat dissipation channel is formed inside the battery pack, which can perform high-efficiency heat dissipation on a support and a battery cell attached to the support inside the battery pack, so that the battery pack can be immediately connected to a charger for charging after discharging is finished, a charging time for a user is shortened, and the battery cell is effectively protected, thereby improving a discharge capability and a service life of the battery pack.

In some embodiments, by disposing the support formed of a thermally conductive material and having a high degree of attachment to a surface of the battery cell, heat generated by the battery cell during use can be efficiently conducted outward through the heat dissipation channel.

In some embodiments, a heat storage member made of a material with a high specific heat capacity is attached to an outer side of the support, and heat in the support can be efficiently absorbed by using the heat storage member, so that it can be reliably ensured that the battery cell and the support attached to the battery cell are not over temperature.

During use of the improved battery pack, a working duration of the battery pack can be extended, and a discharge capability of the battery pack is improved, which is especially suitable for high-temperature and harsh environments.

In this application, the support, the heat storage member, and the housing of the battery pack cooperate with each other to form a direct-blowing heat dissipation channel having a plurality of paths connected in parallel, which can dissipate heat for the battery cell and the support, so that surface temperatures inside the battery pack and the support can be further controlled.

To overcome defects in the related art, the present embodiments further provide a battery pack with good waterproof performance and good heat dissipation performance, which can be better applicable to harsh outdoor working conditions such as high temperature and getting wet.

The foregoing objective of the present embodiments may be achieved by using the following technical solutions.

A battery pack, including: at least one battery module, the battery module is formed by a plurality of battery cells; a support, wherein the support includes a plurality of mounting portions and connecting portion, the connect portion configured to relatively and fixedly connect the mounting portions together; accommodation cavities configured to accommodate the battery cell, the accommodation cavities being formed inside the mounting portion, paths running through the support are preset inside the support, the paths are distributed between adjacent mounting portions, and in an axial direction of the battery cell, the support is provided with a first end and a second end that are opposite to each other and the accommodation cavity is provided with openings respectively located at the first end and the second end; and the battery pack further including a sealing device, which is configured to seal the openings, to isolate the battery cell in the accommodation cavity from the outside.

In some embodiments, the path and the accommodation cavity is independent of each other and is perpendicular to an axial direction of the battery cell.

In some embodiments, the sealing device includes: sealing members and end covers respectively located at the first end and the second end of the support, the sealing member is disposed on an inner side of a periphery of the end cover, and when the end cover is engaged with one end of the support, the end cover and one end of the support form a sealing space isolated from the path.

In some embodiments, the end cover is provided with a first mounting groove configured to mount the sealing member, a squeezing portion is disposed at the first end or the second end, and when the end cover is engaged with one end of the support, the squeezing portion can at least partially extend into the first mounting groove to squeeze the sealing member.

In some embodiments, at least one end of the support is provided with an electric connection sheet, the support is provided with a second mounting groove on one end provided with the electric connection sheet, an electric abutment member is disposed in the second mounting groove, one end of the abutment member extends into the second mounting groove, and the other end is in contact with the sealing member.

In some embodiments, the abutment member includes any one of the following: an ethylene vinyl acetate (EVA) foam, an O-ring, or a heat shrinkable tube.

In some embodiments, the abutment member is formed by injecting a glue in the second mounting groove.

In some embodiments, the battery pack further includes a housing covering the support, where air flow hole in communication with the paths are provided in the housing, and the air flow hole cooperates with the paths to form a heat dissipation channel.

In some embodiments, the battery pack further includes a heat storage member, where the heat storage member is at least partially attached and mounted on an outer side of the support, and a specific heat capacity of the heat storage member is greater than a specific heat capacity of the support.

In some embodiments, first heat dissipation fins are disposed on outer side walls of the mounting portions at intervals, the first heat dissipation fins are located between the connecting portions, and the first heat dissipation fins of two adjacent mounting portions are disposed opposite to each other, to form a central heat dissipation region.

In some embodiments, a predetermined gap is formed between the two adjacent mounting portions, the housing includes an upper cover and a lower cover that are opposite to each other, an upper opening in communication with the predetermined gap is provided in the upper cover, and a lower opening in communication with the predetermined gap is provided in the lower cover; first opening in communication with the predetermined gap, the upper opening, and the lower opening is provided in a side wall of the heat storage member; and

in a direction perpendicular to an axial direction of the battery cell, the first openings are distributed on two sides of the central heat dissipation region, and at least the upper opening, the lower opening, and the first opening cooperate with the central heat dissipation region to form the heat dissipation channel.

In some embodiments, the battery pack further includes a pressing member, wherein the pressing member is pressed on an outer side of the heat storage member and is configured to apply an action force for clamping the support to the heat storage member, and second opening in communication with the first opening, the upper opening, and the lower opening is provided in the pressing member; the first openings and the second openings are distributed on two sides of the central heat dissipation region from inside to outside in the direction perpendicular to the axial direction of the battery cell; and the upper opening, the lower opening, and the central heat dissipation region cooperate with the first openings and the second openings to form the heat dissipation channel.

In some embodiments, the path and the accommodation cavity is independent of each other and are parallel to the axial direction of the battery cell, the path is provided with air vents respectively located at the first end and the second end, and the sealing device is configured to seal the air vents and isolate the accommodation cavity from the path.

In some embodiments, the sealing device includes: an end cover, a first sealing portion, and a second sealing portion, where third opening in communication with the air vents is provided in the end cover, the first sealing portion is disposed around the third opening of the end cover, the second sealing portion is disposed on an inner side of a periphery of the end cover, and when the end cover is engaged with one end of the support, the third opening of the end cover is in communication with the air vents and the end cover and one end of the support form a sealing space isolated from the path.

In some embodiments, the battery pack further includes a housing covering the support, where air flow hole in communication with the paths are provided in the housing, and the air flow hole and the third openings cooperate with the paths to form the heat dissipation channel.

In some embodiments, a first mounting groove configured to mount the second sealing portion is disposed on the periphery of the end cover, and a squeezing portion directly opposite to the first mounting groove is disposed on the support; and the end cover is further provided with a third mounting groove on an outer side of the third opening, where the third mounting groove is configured to mount the first sealing portion.

According to the battery pack provided in the embodiments of this application, a structure of the battery pack is improved. Paths running through a support are preset in the support for mounting battery cells, and the paths are in communication with the outside, which can perform high-efficiency heat dissipation on the support and the battery cell attached to the support inside the battery pack without affecting the entire sealing performance of the battery pack. In addition, the battery pack is further provided with a sealing device, configured to seal openings at two ends of the support, so that the battery cell located in the support is isolated from the outside. The entire battery pack has good waterproof performance and good heat dissipation performance, which can be better applicable to harsh outdoor working conditions such as high temperature and getting wet.

### BRIEF DESCRIPTION OF THE DRAWINGS

The present invention is further described below with reference to the accompanying drawings and embodiments.
FIG. 1 is a schematic structural diagram of a battery pack according to an embodiment of this application.
FIG. 2 is an A-A cross-sectional view of the battery pack provided in FIG. 1.
FIG. 3 is an exploded view of the battery pack provided in FIG. 1.
FIG. 4 is an exploded view of a battery assembly in the battery pack provided in FIG. 1.
FIG. 5 is a front view of a battery assembly in the battery pack provided in FIG. 1.
FIG. 6 is a schematic distribution diagram of a heat dissipation fin on a support according to an embodiment of this application.
FIG. 7 is a schematic structural diagram of cooperation positions between a support and a sealing member as well as an end cover in the battery pack in FIG. 1.
FIG. 8 is a partially enlarged view of part M in FIG. 7.
FIG. 9 is a partially enlarged view of part N in FIG. 7.
FIG. 10 is a schematic structural diagram of a battery pack according to an embodiment of this application.
FIG. 11 is a B-B cross-sectional view of the battery pack provided in FIG. 10.
FIG. 12 is an exploded view of the battery pack provided in FIG. 10.
FIG. 13 is an exploded view of a battery assembly in the battery pack provided in FIG. 10.
FIG. 14 is a schematic structural diagram of a support in the battery pack in FIG. 13.
FIG. 15 is a front view of the support in FIG. 14.
FIG. 16 is a schematic structural diagram of cooperation positions between a support and a sealing member as well as an end cover in the battery pack in FIG. 10.
FIG. 17 is a partially enlarged view of part H in FIG. 16.

### DETAILED DESCRIPTION

The technical solution of the present invention will be described in detail below with reference to the accompanying drawings and specific embodiments. It should be understood that these embodiments are only used to illustrate the present invention and not to limit the scope of the present embodiments. After reading the present embodiments, various equivalent modifications made by those skilled in the art to the present invention shall fall within the scope defined by the appended claims of this application.

It should be noted that, when a component is referred to as "being disposed to" another component, the component may be directly on another component, or there may be an intermediate component. When a component is considered to be "connected to" another component, the component may be directly connected to the another component, or there may be an intermediate component. The terms "vertical", "horizontal", "upper", "down", "left", "right" and similar expressions used in this specification are only for purposes of illustration but not indicate a unique embodiment.

Unless otherwise defined, meanings of all technical and scientific terms used in this specification are the same as those usually understood by a person skilled in the art to which this application belongs. In this application, terms used in the specification of this application are merely intended to describe objectives of the specific embodiments, but are not intended to limit this application. The term "and/or" used in this specification includes any and all combinations of one or more related listed items.

This specification of this application provides an improved battery pack. Compared with the related art, during discharging of a battery cell, the temperature reduction efficiency of the battery cell can be improved, and temperatures of the battery cell and a support in direct contact with the battery cell can be effectively reduced, thereby improving a discharge capability of the battery pack.

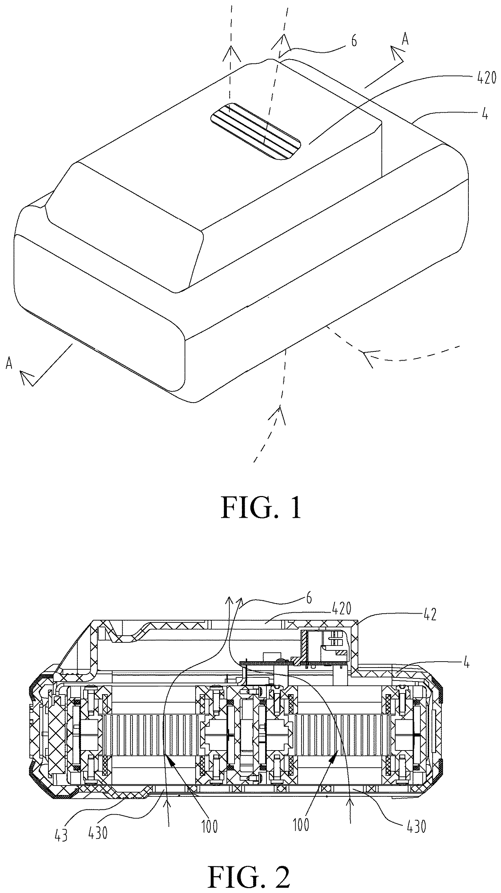

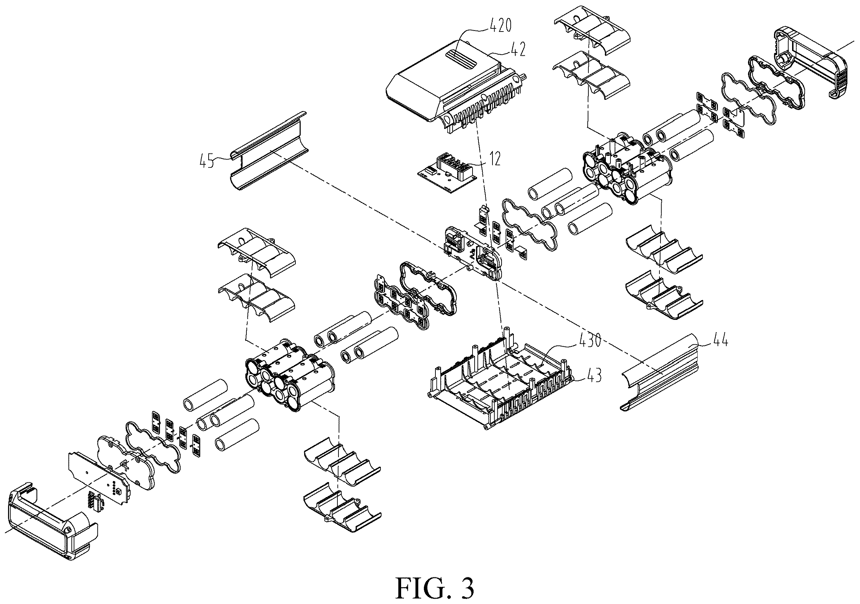

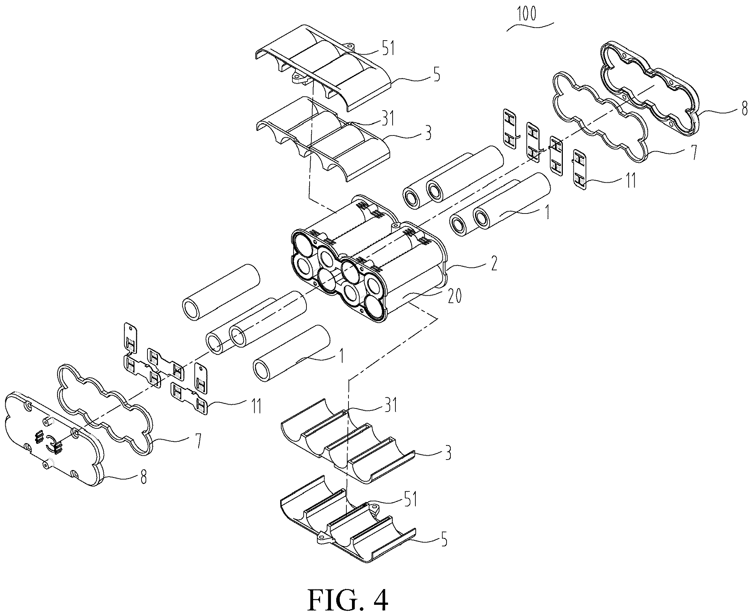

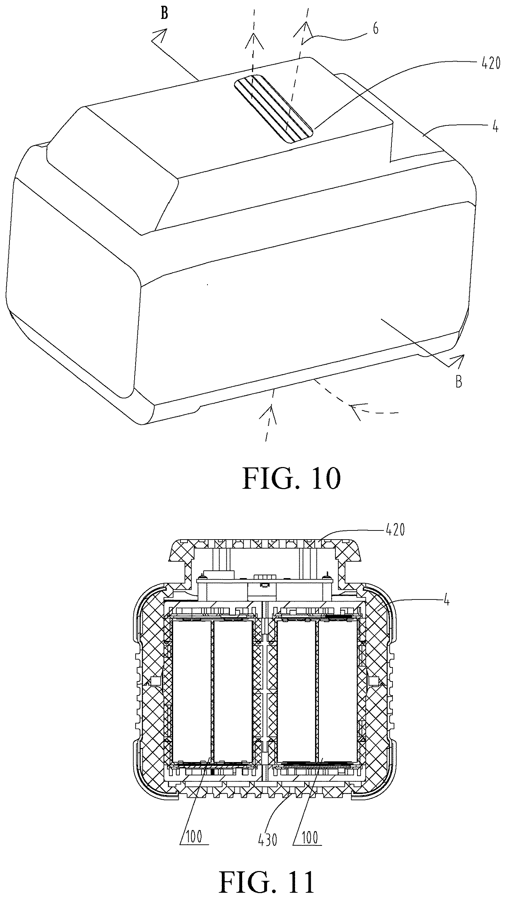

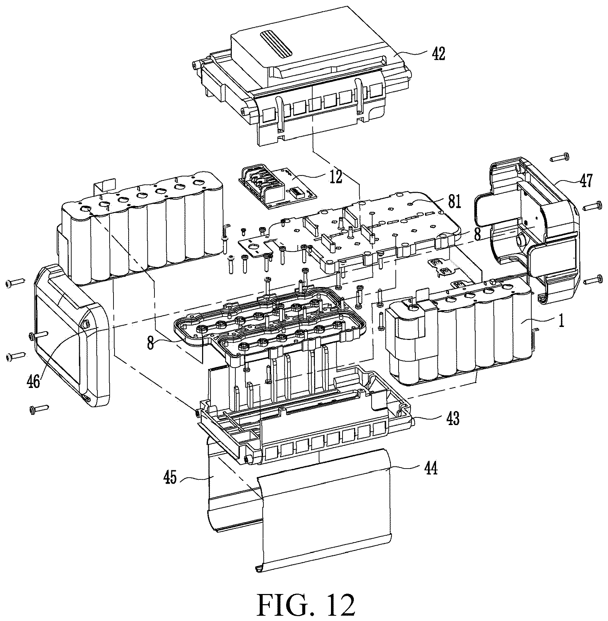

Referring to FIG. 1 to FIG. 12, embodiments of this specification provide a battery pack. The battery pack mainly includes a battery cell 1, a support 2, a housing 4, a sealing device, some assemblies for cooperation mounting, and the like. As shown in FIG. 4 or FIG. 10, at least the battery cell 1, the support 2, the sealing device, and the like may form a battery assembly 100 mounting in the housing 4.

In some embodiments, the number of battery cells 1 and a series-parallel connection manner between the battery cells 1 may be adjusted according to a voltage of the battery cell 1 and different nominal voltages. This is not specifically limited in this application. Optionally, the battery cells 1 may be connected in series, or in parallel, or both serial connection and parallel connection by conductive sheets 11 to form a battery module. There may be one battery module or there may be two or more battery modules.

Referring to FIG. 2, in an embodiment, there may be two battery modules (one on the left and one on the right). One battery module has eight battery cells (as shown in FIG. 4) and the other battery module has seven battery cells. Further, the two battery modules are connected in series by a power supply plate 12, to output a voltage of 60 V.

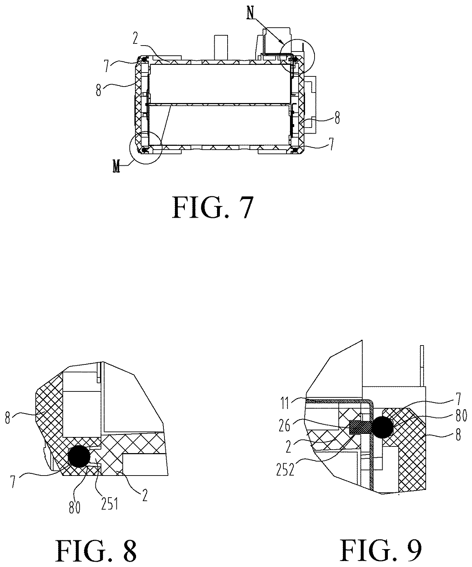

Referring to FIG. 9, in another embodiment, there are also two battery modules. The two battery modules may be connected in parallel by the power supply plate 12. Each battery module may include fifteen battery cells 1 of 4 V, and the fifteen battery cells 1 are connected in series to form a group of battery cells 1 with a nominal voltage of 60 V. Subsequently, the two battery modules are connected in parallel, and thus the outputted voltage is still 60 V, but a current is 2 times that when the fifteen battery cells are connected in series.

In some embodiments, the housing 4 may include an upper cover 42, a lower cover 43, and a first side plate 44, a second side plate 45, a first side cover 46, and a second side cover 47 that are disposed between the upper cover 42 and the lower cover 43. The first side plate 44 and the second side plate 45 are disposed opposite to each other and the first side cover 46 and the second side cover 47 are disposed opposite to each other.

The housing 4 is provided with air flow hole. The air flow hole is configured to guide external air into and out of the battery pack. Specifically, the air flow hole may include an upper opening 420 provided in the upper cover 42 and a lower opening 430 provided in the lower cover 43. During use, the air flow hole of the housing 4 cooperates with another structure in the battery pack to form a heat dissipation channel 6, so as to cool the battery cell 1 and the support 2.

The battery cell 1 is provided with a first end surface and a second end surface that are opposite to each other and a side surface disposed around the first end surface and the second end surface. A shape of the battery cell 1 may be cylindrical. Certainly, the shape of the battery cell 1 may be further adaptively adjusted according to actual requirements, for example, may be a cuboid, or an approximate cuboid, or even another special-shaped construction. The shape and the construction of the battery cell 1 are not specifically limited in this application. In this specification, an example in which the battery cell 1 is of a cylindrical shape is mainly used for description. For other shapes of the battery cell, reference may be made to this application.

In the related art, a skin is disposed on a surface of a general battery cell 1. The skin is generally made of an insulating material (for example, plastic) with poor heat conduction performance. Further, when the skin is disposed on the battery cell 1, the skin is sleeved on an outer surface of the battery cell 1 by wrapping. Therefore, the skin cannot be completely attached to the battery cell 1. As a result, at least some air segments are easily formed between the skin and the battery cell 1. Both the air segment and the skin with the poor heat conduction performance affects the heat conduction of the battery cell 1 to the outside.

In some embodiments, to conduct the heat in the battery cell 1 outward as efficiently as possible, skin removal processing is performed on the outer surface of the battery cell 1, that is, the skin is no longer disposed. Subsequently, the battery cell 1 after the skin removal processing is directly attached to the support 2, to improve the heat conduction efficiency.

In some embodiments, the support 2 is mainly configured to mount the battery cell 1. The support 2 is formed of a thermally conductive material and can conduct the heat on the battery cell 1 outward in time. Specifically, to ensure that the support 2 has good heat conduction performance, a thermal conductivity of the thermally conductive material is greater than 0.3 W/m.k.

To improve the stability of the structure of the support 2 and reduce mounting difficulty, the support 2 may be an intact support. The intact support may be integrally formed or may be disposed separately and then assembled from separate parts. Certainly, in this specification, a case that the support 2 is configured in the form of a separate structure is not excluded. A range of a specific heat capacity of the support 2 is greater than 1.8 W/(g.K), to ensure that the support 2 can absorb the heat in the battery cell 1 with relatively high efficiency and rapidly conduct the absorbed heat outward based on the high heat conduction performance of the support. Specifically, polypropylene (PP), high density polyethylene (HDPE), low density polyethylene (LDPE), or the like may be selected for the material of the support 2.

In some embodiments, the support 2 may include a plurality of mounting portions 20. An accommodation cavity 21 configured to accommodate the battery cells 1 is formed inside the mounting portion 20. Specifically, a quantity of mounting portions 20 may be the same as the quantity of battery cells 1 or may be greater than the quantity of battery cells 1. The battery cell 1 is at least partially attached and mounted in the accommodation cavity 21.

In some embodiments, the intact support 2 is mainly used as an example for description. For the support 2 in another form, reference may be made to this application. The intact support 2 includes a plurality of mounting portions 20. The mounting portions 20 in the support 2 may be arranged in a predetermined arrangement sequence. For example, the plurality of mounting portions 20 may be arranged at specific distances in a first direction, to form one row of mounting portions 20. In a second direction perpendicular to the first direction, a plurality of rows of mounting portions 20 are arranged at specific distances, to form an array of mounting portions 20. Certainly, the mounting portions 20 may be further arranged in another sequence according to actual use requirements. This is not uniquely limited in this application.

A plurality of paths 22 running through the support 2 are preset inside the support 2, and the plurality of paths 22 are distributed between adjacent mounting portions 20. The inside of the support 2 refers to a region defined by the connecting line of centers of the outermost battery cells 1 in the battery module. The path 22 and the accommodation cavity 21 are independent of each other. As the path 22 configured for circulating air for heat dissipation and the accommodation cavity 21 configured to accommodate the battery cell 1 are independent of each other, that is, are not connected, the battery cell 1 may conduct the heat by using the heat conducting support 2, and the thermal conductivity is high.

When the path 22 and the accommodation cavity 21 are not independent of each other, that is, the air flow path 22 is in communication with the accommodation cavity 21, heat conduction is mainly performed through air, and the thermal conductivity of the air is not higher than the thermal conductivity of the heat conducting support 2, so the heat conducting effect is relatively poor. In addition, after the path 22 and the accommodation cavity 21 are independent of each other, subsequent arrangement of a waterproof sealing structure is facilitated. Compared with the case that the path 22 and the accommodation cavity 21 are independent of each other, it is not easy to interfere with the waterproof sealing structure.

In some embodiments, the mounting portion 20 may be a cavity body with a specific wall thickness. A hollow part of the cavity body is the accommodation cavity 21. The mounting portion 20 includes a side wall, a positioning opening, and a mounting opening opposite to the positioning opening.

In some embodiments, an outer diameter of the battery cell 1 is greater than a hold diameter of the accommodation cavity 21, and the battery cell 1 may be disposed in the accommodation cavity 21 of the mounting portion 20 by hot pressing and tensioning.

When the battery cell 1 is disposed in the accommodation cavity 21 by hot pressing and tensioning, the outer diameter of the battery cell 1 is greater than the hole diameter of the accommodation cavity 21, and an initial surface area of the accommodation cavity 21 in the support 2 is less than an outer surface area of the battery cell 1. After the battery cell 1 is mounted in the accommodation cavity 21 by hot pressing and tensioning, an outer side surface of the battery cell 1 may be directly and completely attached to a side wall inside the mounting portion 20, and a percentage (a degree of attachment) of an attaching area to a side area can be close to 100%.

In some embodiments, the support 2 is provided with a deformation portion 23 on a side wall of the mounting portion 20, an outer diameter of the battery cell 1 is less than a hole diameter of the accommodation cavity 21. When the battery cell 1 is mounted into the mounting portion 20, the deformation portion 23 set on the mounting portion 20 is elastically deformed to clamp the battery cell 1 in the accommodation cavity 21.

In some embodiments, the deformation portion 23 may be at least one protrusion formed inward by the side wall of the mounting portion 20. After the deformation portion 23 on the side wall of the mounting portion 20 is elastically deformed, the battery cell 1 is clamped in the accommodation cavity 21 thereby. In this case, the initial surface area of the accommodation cavity 21 in the support 2 is greater than the outer surface area of the battery cell 1. After the battery cell 1 is mounted in the accommodation cavity 21 by squeezing the deformation portion 23, most of the outer side surface of the battery cell 1 may be directly attached to the side wall inside the mounting portion 20, reaching a degree of attachment of 80% or more.

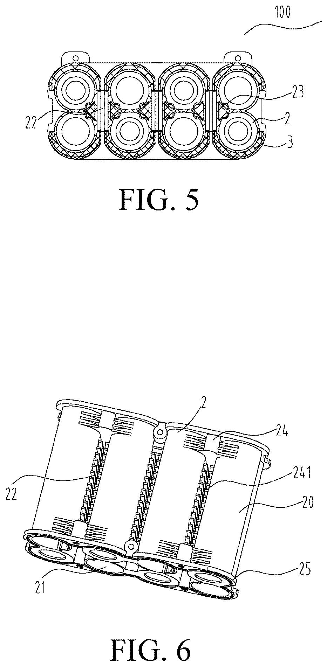

As shown in FIG. 5, an example in which there are one or two protrusions is used for description. The protrusion may be disposed on one side relatively close to the mounting opening. When the battery cell 1 is mounted from the mounting opening, the protrusion is elastically deformed, so that the battery cell 1 can be clamped into the mounting portion 20 when the battery cell 1 is mounted, to ensure that the outer side surface of the battery cell 1 is attached to the accommodation cavity 21 of the mounting portion 20. In addition, during use, even though the battery pack vibrates, through elastic deformation of the protrusion, each battery cell 1 can also be closely attached to the accommodation cavity 21 of the mounting portion 20.

In addition, the deformation portion 23 may alternatively be an opening provided in the side wall of the mounting portion 20. By providing the opening, the mounting portion may be deformed, to be better attached to the battery cell 1. Certainly, the form of the deformation portion 23 is not limited to the foregoing examples.

On the whole, regardless of which mounting manner is used, it is necessary to ensure that an attaching area between a side surface of each battery cell 1 and the mounting portion 20 occupies at least 80% of the side surface, so that it can be ensured that heat generated by the battery cell 1 during operation can be rapidly conducted to the support 2.

In some embodiments, the battery pack may further include a heat storage member 3 at least partially attached and mounted on an outer side of the support 2. The heat storage member 3 may be made of a material with a large specific heat capacity and a strong heatabsorption capacity. Specifically, a specific heat capacity of the heat storage member 3 is greater than a specific heat capacity of the support 2, and the heat storage member 3 is at least partially attached and mounted on the outer side of the support 2, so that the heat in the support 2 can be efficiently absorbed by using the heat storage member, to ensure that temperatures of the support 2 and the battery cell 1 attached and mounted on the support 2 are not over temperature. When the battery pack is placed on a charger, a large amount of heat accumulated in the heat storage member 3 may be cooled by starting a fan of the charger.

In some embodiments, the heat storage member 3 is made of a material with a specific heat capacity greater than 2.6 J/(g.K). The material with the high specific heat capacity is a non-phase change material, for example, may be any one of the following: a polymer material, a highly thermally conductive material, or silica gel. Certainly, the material with the high specific heat capacity may alternatively be a phase change material. When being made of the non-phase change material with the high specific heat capacity, the heat storage member 3 may absorb heat with a stable specific heat capacity parameter during heat absorption and no phase change occurs during heat absorption. When no phase change occurs in the heat storage member 3 during heat absorption, not only the high heat absorption efficiency can be maintained, but also the overall structure of the battery pack can be simplified. When the phase change material is used for a main material of the heat storage member 3, a status of the phase change material changes during use, for example, from a solid state to a molten state. Therefore, an accommodation cavity for accommodating the phase change material needs to be disposed in terms of structure, or the phase change material needs to be sealed.

In some embodiments, the support 2 includes connecting portion 24. The connecting portion 24 is disposed between two adjacent mounting portions 20 in the support 2. Specifically, the connecting portion 24 and the sealing end 25 are integrally formed. The connecting portion 24 is located at an end portion close to the mounting portion 20. The end portions of the plurality of mounting portions 20 form two ends of the support 2.

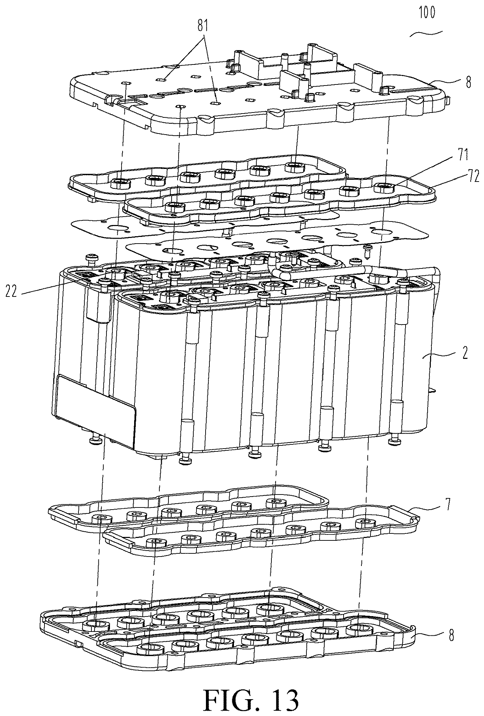

To ensure waterproof-sealing performance of the battery cell 1 in the battery pack, sealing devices are disposed on two ends of the support 2. Specifically, the end portions of the plurality of mounting portions 20 form two ends (that is, the sealing ends 25) of the support 2. The sealing device includes a sealing member 7 and an end cover 8. The sealing member 7 is disposed between the sealing end 25 and the end cover 8, to reliably seal the battery cell 1. A shape and a construction of the sealing member 7 are mainly determined based on a shape of an accommodation space formed by cooperation between the end cover 8 and the sealing end 25 and a position to be sealed by the sealing member. The sealing end 25 may be a ring-shaped protrusion at an end portion of the support 2. The protrusion and the support 2 may be integrally formed or the protrusion may be fixed to the end portion of the support 2 by detachable connection. As shown in FIG. 4, when the end cover 8 is provided with no opening, the sealing member 7 may be in the form of a sealing ring with a specific wall thickness. As shown in FIG. 13, when the end cover 8 is provided with an opening, the sealing member 7 may be in the form of a sealing piece provided with the opening.

A heat dissipation channel 6 is formed in the battery pack. Referring to FIG. 1 to FIG. 6, in some embodiments, a flow direction of an air flow in the heat dissipation channel 6 may be perpendicular to an axial direction of the battery cell 1 as a whole. In this embodiment, outer walls of two adjacent mounting portions 20 are spaced apart by a predetermined gap to form the path 22. The path 22 extends in a direction perpendicular to the axial direction of the battery cell 1. A side wall of the heat storage member 3 is provided with first openings 31 in communication with the predetermined paths 22 and the air flow holes.

The heat storage member 3 may include a first portion and a second portion. The first portion and the second portion may be attached and fixed to the outer side of the support 2 by detachable connection or another limit manner. Inner surfaces of the first portion and the second portion may match the outer side surface of the support 2. The first portion and the second portion are provided with the first openings 31 in communication with the paths 22.

The path 22 is configured to match the first opening 31 of the heat storage member 3 and the air flow hole of the housing 4 in the battery pack, to form the heat dissipation channel 6. The connecting portion 24 is located at an end surface close to the battery cell 1. In the axial direction of the battery cell 1, in addition to a position of the connecting portion 24, the path 22 between two connecting portions 24 located at the end portions may be configured for circulation of an air flow. When the longish path 22 is formed between the battery cells 1 of the battery pack, it is beneficial to ensure that the battery pack has a better heat dissipation effect during use.

In some embodiments, the paths are distributed between outer side walls of adjacent mounting portions. To meet a heat dissipation requirement, a minimum width of the path is greater than 1.5 mm.

As shown in FIG. 6, further, to ensure that the heat dissipation channel has a good heat dissipation effect on the support 2, heat dissipation fins 241 are respectively disposed on the side walls of the mounting portions 20 between the connecting portions 24. The heat dissipation fins are distributed at intervals in the axial direction of the battery cell 1. The heat dissipation fins 241 of two adjacent mounting portions 20 are disposed opposite to each other, to form a central heat dissipation region. The heat dissipation fin 241 is mainly configured to rapidly transfer the heat that is conducted from the battery cell 1 to the support 2 to the outside through the heat dissipation channel 6. To improve a heat dissipation effect of the heat dissipation fin 241 as much as possible, a length over which the heat dissipation fins 241 are distributed is 3/4 of a total length of the battery cells 1 in the axial direction.

In some embodiments, considering that the heat dissipation fins 241 are disposed in a space in which the path 22 is located, to ensure that the central heat dissipation region in which the heat dissipation fins 241 are located has a better cooling effect on the support 2 when the air flow is circulated, a distance between the outer side walls of the two mounting portions 20 cannot be excessively small, generally not less than 5 mm. Considering that the entire size of the battery pack cannot be excessively large, especially limited by a mounting space, a size of the housing of the battery pack cannot be excessively large. The distance between the outer side walls of the two mounting portions 20 cannot be excessively large, generally not greater than 15 mm. On the whole, on the premise that the heat dissipation fin 241 is disposed, a distance of the path 22 in the direction perpendicular to the axial direction of the battery cell 1 is between 5 mm and 15 mm.

As shown in FIG. 4, in some embodiments, the battery pack may be further provided with a pressing member 5. The pressing member 5 is pressed on an outer side of the heat storage member 3 and is configured to apply an action force for clamping the support 2 to the heat storage member 3.

In some embodiments, the pressing member 5 may be made of a rigid material. The pressing member 5 may be attached to an outer surface of the heat storage member 3, so that the heat storage member 3 may be reliably attached to the support 2, to ensure that the heat storage member efficiently absorbs the heat of the support 2. Specifically, the pressing member 5 has an inner side relatively close to the heat storage member 3 and an outer side relatively far away from the heat storage member 3. A shape of the inner side of the pressing member 5 is similar to that of the outer side of the heat storage member 3, so that it is ensured that the pressing member 5 can reliably act on the outer surface of the heat storage member 3 and the pressing member 5 is prevented from failing to press the heat storage member 3 due to vibration or another force majeure factor during use.

In some embodiments, the pressing member 5 may be divided into two buckled parts. The two buckled parts may be fixed by detachable connection. The detachable connection manner may be a connection manner such as bolts, screws, or the like, or certainly may be another feasible connection manner. This is not specifically limited in this application.

When the heat storage member 3 is attached and fixed to the outer side of the support 2 by using the pressing member 5, the pressing member 5 may be provided with second openings 51 in communication with the first openings 31 and the air flow holes.

As shown in FIG. 2 and FIG. 4, specifically, In the direction perpendicular to the axial direction of the battery cell 1, the first openings 31 and the second openings 51 are distributed on two sides of the mounting portions 20 from inside to outside. The upper opening 420, the lower opening 430, and the paths 22 cooperate with the first openings 31 and the second openings 51 to form a heat dissipation channel 6. After entering the battery pack through the lower openings 430, external air sequentially flows through the second openings 51, the first openings 31, the paths 22, the first openings 31, and the second openings 51 and flows out the battery pack from the upper opening 420.

The second openings 51 may be directly opposite to the first openings 31. The air flow holes are directly opposite to the paths 22 between the mounting portions 20. After flowing through the second openings 51 and the first openings 31 through the air flow holes on the housing 4, the external air is directly guided to the central heat dissipation region corresponding to the path 22, and then flows through the first openings 31 and the second openings 51 to flow out from the housing 4, to form the heat dissipation channel 6. On the whole, the heat dissipation channel 6 is a direct-blowing heat dissipation channel 6 having a plurality of paths connected in parallel, which formed by a plurality of short-path flow channels arranged in parallel. And the heat dissipation channel 6 can directly and efficiently act on each mounting portion 20 of the support 2, to perform efficient heat dissipation on the support 2 and the battery cell 1 located in the support 2.

In some embodiments, the battery pack may not be provided with a pressing member . The housing 4 may directly abut against the heat storage member 3, so that the heat storage member 3 is attached to the outer surface of the support 2. In this case, the heat dissipation channel 6 is mainly formed by cooperation among the air flow holes on the housing 4, the first openings 31 on the heat storage member 3, and the central heat dissipation region between the mounting portions 20.

This specification further provides a battery pack, which may include: at least one battery module. The battery module includes a plurality of electrically connected battery cells 1; a support 2 formed of a thermally conductive material, where the support 2 includes a plurality of mounting portions 20 and connecting portions 24, the connecting portions 24 relatively fixedly connect the plurality of mounting portions 20 together, accommodation cavities 21 configured to accommodate the battery cells 1 are formed in the mounting portions 20, a plurality of paths 22 running through the support 2 are preset inside the support 2, and the paths 22 extend in a direction perpendicular to an axial direction of the battery cell 1; and a housing 4, where air flow holes in communication with the plurality of paths 22 are provided in the housing 4.

In some embodiments, for specific shapes, structures, relative position relationships, and the like of the battery cell 1, the support 2 formed of the thermally conductive material, and the housing 4 included in the battery pack, reference is made to the detailed descriptions of the foregoing embodiments. Details are not described in this application.

According to the battery pack provided in this embodiment, a path formed in a support 2 extends in a direction perpendicular to an axial direction of a battery cell 1, and the path is configured to match an air flow hole on a housing 4 to form a heat dissipation channel 6 for cooling the support 2 and the battery cell 1 disposed in the support 2. Because the heat dissipation channel 6 and sealing devices located at two ends of the support 2 are independent of each other in space and do not affect each other, setting difficulty of the sealing device can be reduced, and it is ensured that the sealing device can reliably seal the battery cell 1.

As shown in FIG. 7, the sealing devices are respectively disposed on two sides of sealing ends 25 of the support 2. The sealing device includes an end cover 8 and a sealing member 7. As shown in FIG. 8, when no conductive sheet 11 needs to be led out from one side of the support 2, a squeezing portion 251 may be disposed at the sealing end 25. Specifically, the squeezing portion 251 may be an annular protrusion formed on an outer surface of the sealing end 25. Certainly, the squeezing portion 251 may alternatively be in another shape or in another setting manner. This is not specifically limited in this application. The end cover 8 is provided with a first mounting groove 80 configured to mount the sealing member 7. During assembly, the sealing member 7 is mounted in the first mounting groove 80 of the end cover 8, and then the end cover 8 provided with the sealing member 7 may be connected to the sealing end 25 of the support 2 by a connecting member. The squeezing portion 251 at the sealing end 25 can be in contact with the sealing member 7, to cause the sealing member 7 to be elastically deformed under the action of a squeeze force formed after the end cover 8 cooperates with the support 2, to implement sealing.

As shown in FIG. 9, when the conductive sheet 11 needs to be led out of the end cover in the other side of the support 2, in order to improve the sealing performance at a position from which the conductive sheet 11 extends, a second mounting groove 252 may be formed at the sealing end 25, and an abutment member 26 with an elastic deformation capability is disposed in the second mounting groove 252. Specifically, one end of the abutment member 26 extends into the second mounting groove 252, and the other end is in contact with the sealing member 7. Under the action of the squeeze force formed after the end cover 8 cooperates with the support 2, both the abutment member and the sealing member 7 are elastically deformed. Compared with a non-deformable or rigid abutment member, the elastic abutment member 26 can better eliminate a gap between the end cover 8 and the support 2. Optionally, the abutment member 26 may be in the form of an ethylene vinyl acetate (EVA) foam, an O-ring, or a heat shrinkable tube. Certainly, the abutment member may be in another form with an elastic deformation capability. This is not specifically limited in this application.

In addition, to ensure the sealing performance at a cooperation position, for example, to better ensure the sealing performance at the position to which the conductive sheet 11 extends and implement a waterproof function, the abutment member 26 may be formed by injecting a glue in the second mounting groove 252. In addition, at another cooperation position, the sealing member may also be formed by injection, to ensure the sealing reliability of a to-besealed position.

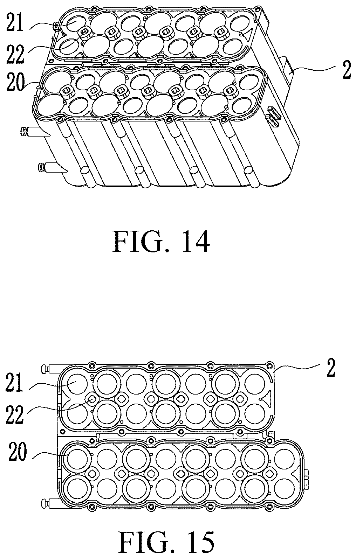

As shown in FIG. 10 to FIG. 15, in some other embodiments, a flow direction of an air flow in the heat dissipation channel 6 may be generally parallel to the axial direction of the battery cell 1. The end cover 8 is provided with third openings 81. Specifically, as shown in FIG. 14 and FIG. 15, the path 22 runs through the support in the axial direction of the battery cell 1. Specifically, the path 22 may be located in a region enclosed by four adjacent mounting portions 20, and the path 22 is not in communication with the accommodation cavity between the mounting portions 20, to ensure the sealing performance of the battery cell 1.

As shown in FIG. 13, when the end cover 8 is provided with the third openings 81, the sealing member 7 includes a first sealing portion 71 matching the third opening 81 of the end cover 8 and the path 22 of the support 2 and a second sealing portion 72 matching the end cover 8 and the sealing end 25 of the support 2.

In some embodiments, the first sealing portion 71 may be annular and is disposed between the path 22 of the support 2 and the third opening 81 of the end cover 8. On one hand, the first sealing portion is configured to perform circumferential sealing between the path 22 of the support 2 and the mounting portion 20, and on the other hand, is configured to communicate the third opening 81 with the path 22 as an intermediate communication portion. An inner diameter of the first sealing portion 71 may be equal to or slightly greater than hole diameters of the third opening 81 and the path 22. The second sealing portion 72 may be a sealing ring with a specific wall thickness and is disposed between the sealing end cover 8 and the sealing end 25 of the support 2, to implement sealing. The first sealing portion 71 and the second sealing portion 72 may be integrally formed or may be formed separately. Specifically, this is not limited in this application.

In the axial direction of the battery cell 1, the third openings 81 are distributed at two ends of the battery cell 1. The lower openings 430 and the upper opening 420 can cooperate with the third openings 81 and the paths 22 to form a heat dissipation channel 6. After entering the battery pack through the lower openings 430, external air sequentially flows through the third openings 81, the paths 22, and the third openings 81, and flows out of the battery pack from the upper opening 420.

In some embodiments, the heat dissipation channel 6 is also a direct-blowing heat dissipation channel having a plurality of paths connected in parallel, whitch formed by a plurality of short-path flow channels arranged in parallel. A difference from the foregoing embodiment lies in that a flow direction of air in the heat dissipation channel 6 is generally parallel to the axial direction of the battery cell 1. On the whole, the heat dissipation channel 6 is a direct-blowing heat dissipation channel having a plurality of paths connected in parallel, and an air flow flowing through the heat dissipation channel 6 can directly and efficiently act on each mounting portion 20 of the support 2, to perform efficient heat dissipation on the support 2 and the battery cell 1 in the support 2.

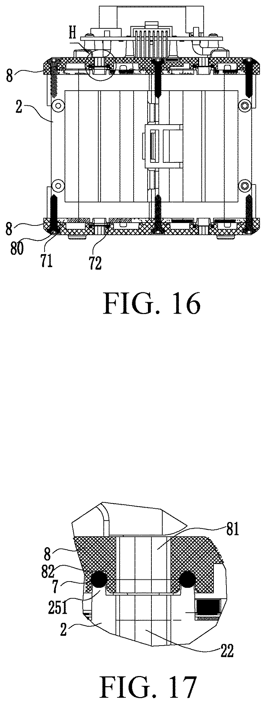

Referring to FIG. 16 and FIG. 17, the path 22 formed in the support 2 is parallel to the axial direction of the battery cell 1. Therefore, the sealing device disposed at the sealing end 25 of the support 2 not only requires a sealing function, but also requires to cooperate with the path 22 of the support 2 and the housing 4, to form a heat dissipation channel 6.

In some embodiments, a first mounting groove 80 is formed on an inner surface on a periphery of the end cover 8 cooperating with the support 2, and the first mounting groove 80 is configured to mount the second sealing portion 72. A squeezing portion 251 is disposed on an outer surface of the sealing end 25 of the support 2 directly opposite to the first mounting groove 80. Specifically, the squeezing portion 251 may be an annular protrusion formed on the outer surface of the sealing end 25. Certainly, the squeezing portion 251 may alternatively be in another shape or in another setting manner. This is not specifically limited in this application.

In addition, the third openings 81 provided in the end cover 8 are directly opposite to the path 22 of the support 2. A third mounting groove 82 is formed on an inner side of the end cover 8 cooperating with the support 2, and the third mounting groove 82 is configured to mount the first sealing portion 71. Correspondingly, a squeezing portion 251 is also disposed on an outer surface of the sealing end 25 of the support 2 directly opposite to the third mounting groove 82. Specifically, the squeezing portion 251 may also be an annular protrusion formed on the outer surface of the sealing end 25.

During assembly, the first sealing portion 71 and the second sealing portion 72 are respectively mounted in the third mounting groove 82 and the first mounting groove 80 of the end cover 8, and then the end cover 8 provided with the sealing member 7 may be connected to the sealing end 25 of the support 2 by a connecting member. The squeezing portion 251 at the sealing end 25 can be in contact with the sealing member 7 and causes the sealing member 7 to be elastically deformed under the action of a squeeze force formed after the end cover 8 cooperates with the support 2, so that waterproof-sealing can be implemented on the sealing end 25 of the support 2 without affecting the connectivity between the path 22 in the support 2 and the air flow hole of the housing 4.

In a specific use scenario, for example, for a high-power direct-current tool in a high temperature environment, an external ambient temperature is high, and the tool has a high power, resulting in a large heat generation amount. In this case, heat generated in a battery pack cannot be transferred outward in time, resulting in insufficient discharge capability of the battery pack, which cannot meet the use requirement of the high-power direct-current tool at a high temperature.

However, according to the battery pack provided in this application, by disposing the support 2 formed of a thermally conductive material and having a high degree of attachment to a surface of the battery cell 1, heat generated by the battery cell 1 during use can be efficiently conducted outward. Further, a heat storage member 3 made of a material with a high specific heat capacity is attached to an outer side of the support 2, and heat in the support 2 can be efficiently absorbed by using the heat storage member 3, so that it can be reliably ensured that the battery cell 1 and the support 2 attached to the battery cell 1 are not over temperature. During use of the improved battery pack, a working duration of the battery pack can be extended, and a discharge capability of the battery pack is improved.

In some embodiments, the support 2, the heat storage member 3, and the housing 4 of the battery pack cooperate with each other to form a direct-blowing heat dissipation channel with a plurality of paths connected in parallel, which can dissipate heat for the battery cell 1, so that surface temperatures inside the battery pack and the support 2 can be further controlled.

It should be noted that, in the descriptions of this application, terms "first" and "second" are only used to describe the objective and distinguish similar objects without a limitation on a sequence between the two, and cannot be understood as indicating or implying relative importance. In addition, in the description of this application, unless otherwise stated, "a plurality of" means two or more than two.

The foregoing embodiments in this specification are all described in a progressive manner. For same or similar parts in the embodiments, cross reference is made, and descriptions of each embodiment focus on a difference from other embodiments.

The foregoing descriptions are merely several embodiments of the present invention. Although the embodiments disclosed in the present invention are described above, the content of the embodiments is only used to facilitate the understanding of the present invention, and is not intended to limit the present invention. Any person skilled in the art of the present invention can make any modification and change in the form and details of the embodiments without departing from the spirit and scope of the present invention. However, the protection scope of the present embodiments should still be subject to the scope defined by the appended claims.

## Claims

1. A battery pack, comprising:
at least one battery module, the battery module comprising a plurality of battery cells;
a support formed of a thermally conductive material, wherein the support comprises a plurality of mounting portions and connecting portion, the connecting portion relatively fixedly connect the plurality of mounting portions together;
accommodation cavities configured to accommodate the battery cells, the accommodation cavities being formed in the mounting portions, and a plurality of paths running through the support are preset inside the support, and the plurality of paths are distributed between adjacent mounting portions; and
a housing covering the support, the housing comprising air flow hole in communication with the plurality of paths.

2. The battery pack according to claim 1, wherein the plurality of paths and the accommodation cavities are independent of each other.

3. The battery pack according to claim 1, further comprising a heat storage member at least partially attached and mounted on an outer side of the support, wherein a specific heat capacity of the heat storage member is greater than a specific heat capacity of the support.

4. The battery pack according to claim 3, wherein the heat storage member is made of a material with a specific heat capacity greater than 2.6 J/(g.K).

5. The battery pack according to claim 1, wherein a thermal conductivity of the thermally conductive material is greater than 0.3 W/m.k.

6. The battery pack according to claim 1, wherein the support is provided with a deformation portion on a side wall of the mounting portion, and an outer diameter of the battery cell is less than a hole diameter of the accommodation cavity, and the battery cell is clamped and attached to the accommodation cavity through elastic deformation of the deformation portion after being accommodated in the accommodation cavity.

7. The battery pack according to claim 6, wherein the deformation portion is at least one protrusion formed inward by the side wall of the mounting portion.

8. The battery pack according to claim 1, wherein an outer diameter of the battery cell is greater than a hole diameter of the accommodation cavity, and the battery cell is disposed in the accommodation cavity of the mounting portion by hot pressing and tensioning.

9. The battery pack according to claim 6 or 8, wherein the battery cell is provided with a first end surface and a second end surface that are opposite to each other and a side surface disposed around the first end surface and the second end surface, and an attaching area between the side surface and the mounting portion occupies at least 80% of the side surface.

10. The battery pack according to claim 1, wherein the paths are distributed between outer side walls of adjacent mounting portions, and a minimum width of the path is greater than 1.5 mm.

11. The battery pack according to claim 1, wherein the path extends in a direction perpendicular to an axial direction of the battery cell.

12. The battery pack according to claim 11, wherein heat dissipation fins are respectively disposed on side walls of the mounting portions at two sides of the paths, the heat dissipation fins are distributed at intervals in an axial direction of the battery cell, and a length over which the heat dissipation fins are distributed is 3/4 of a total length of the battery cells in the axial direction.

13. The battery pack according to claim 11, further comprising a heat storage member at least partially attached and mounted on an outer side of the support, wherein first openings in communication with the paths and the air flow hole are provided in the heat storage member; the housing comprises an upper cover and a lower cover that are opposite to each other, and the air flow hole comprises an upper opening provided in the upper cover and a lower opening provided in the lower cover; and the paths run through the support in the direction perpendicular to the axial direction of the battery cell.

14. The battery pack according to claim 13, further comprising a pressing member, wherein the pressing member is pressed on an outer side of the heat storage member and is configured to apply an action force for clamping the support to the heat storage member, and the pressing member comprises second openings in communication with the first openings and the air flow hole;
the first openings and the second openings are distributed on two sides of the paths from inside to outside in the direction perpendicular to the axial direction of the battery cell; and the upper opening, the lower opening, and the paths cooperate with the first openings and the second openings to form a heat dissipation channel.

15. The battery pack according to claim 1, wherein the housing comprises an upper cover and a lower cover that are opposite to each other, and the air flow hole comprises an upper opening provided in the upper cover and a lower opening provided in the lower cover; and the support is provided with an end cover in an axial direction of the battery cell, third openings is provided in the end cover, the paths run through the support in the axial direction of the battery cell, and the lower opening and the upper opening cooperate with the third openings and the paths in the axial direction of the battery cell to form a heat dissipation channel.

16. A battery pack, comprising:
at least one battery module, the battery module comprising a plurality of battery cells;
a support formed of a thermally conductive material, wherein the support comprises a plurality of mounting portions and connecting portion, the connecting portion relatively fixedly connect the plurality of mounting portions together;
accommodation cavities configured to accommodate the battery cells, the accommodation cavities being formed in the mounting portions, a plurality of paths running through the support are preset inside the support, and the plurality of paths extend in a direction perpendicular to an axial direction of the battery cell; and
a housing, the housing comprising air flow hole in communication with the plurality of paths.

17. The battery pack according to claim 16, wherein the plurality of paths and the accommodation cavities are independent of each other.
